(19) Europäisches Patentamt
European Patent Office
Office européen des brevets

(11) **EP 2 477 341 A1**

(12) **EUROPEAN PATENT APPLICATION**

(43) Date of publication:
**18.07.2012 Bulletin 2012/29**

(51) Int Cl.:
**H04B 7/02** (2006.01)   **H04B 7/06** (2006.01)
**H04W 52/24** (2009.01)

(21) Application number: **12151037.4**

(22) Date of filing: **13.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.01.2011 US 201161433024 P**
**21.12.2011 US 201113332782**

(71) Applicant: **Fujitsu Limited**
**Kawasaki-shi, Kanagawa 211-8588 (JP)**

(72) Inventor: **Zhu, Chenxi**
**Santa Clara, CA California 95050 (US)**

(74) Representative: **Tsang, Olivia**
**Haseltine Lake LLP**
**300 High Holborn**
**London WC1V 7JH (GB)**

(54) **Power setting and pre-coding for wireless data transmission from multiple locations to a single device**

(57)    In one embodiment, a mobile device determines channel coefficient matrices for radio transmission from antennas at a plurality of locations, generates a power scaling vector based on the channel coefficient matrices, and selects one or more pre-coding matrices based on at least in part the power scaling vector. The antennas are operably connected to one or more base stations. The mobile device transmits the selected pre-coding matrices and the power scaling vector to the base stations, causing the base stations to transmit further data to the mobile device based on the selected pre-coding matrices and the power scaling vector.

FIGURE 3

EP 2 477 341 A1

**Description**

This disclosure generally relates to wireless communication.

Multiple-input and multiple-output (MIMO), or the use of multiple antennas at both the transmitter and receiver in radio transmission, can improve wireless communication performance in data throughput and link range. MIMO is an important part of modern wireless communication standards such as Institute of Electrical and Electronics Engineers (IEEE) 802.11n (Wi-Fi), 3rd generation partnership project (3GPP) Long Term Evolution (LTE), Evolved High-Speed Packet Access (HSPA+), and IEEE 802.16 (Worldwide Interoperability for Microwave Access or WiMAX).

According to an embodiment of an aspect of the present invention, there is provided a method comprising, by a mobile device, determining a respective channel coefficient matrix for radio transmission received from one or more antennas at each of a plurality of locations, the antennas at the plurality of locations being operably connected to one or more base stations, generating a power scaling vector based on the channel coefficient matrices, selecting one or more pre-coding matrices based at least in part on the power scaling vector, and transmitting the selected pre-coding matrices and the power scaling vector to the one or more base stations, causing the one or more base stations to transmit further data based on the selected pre-coding matrices and the power scaling vector.

According to an embodiment of another aspect of the present invention, there is provided a computer software, when run on a computer, causes the computer to determine a respective channel coefficient matrix for radio transmission received from one or more antennas at each of a plurality of locations, the antennas at the plurality of locations being operably connected to one or more base stations, generate a power scaling vector based on the channel coefficient matrices, select one or more pre-coding matrices based at least in part on the power scaling vector, and transmit the selected pre-coding matrices and the power scaling vector to the one or more base stations, causing the one or more base stations to transmit further data based on the selected pre-coding matrices and the power scaling vector.

According to an embodiment of a further aspect of the present invention, there is provided an apparatus comprising one or more main processors, one or more communication interfaces, one or more computer-readable non-transitory storage media embodying instructions operable, when executed, cause one or more of the processors to determine a respective channel coefficient matrix for radio transmission received from one or more antennas at each of a plurality of locations, the antennas at the plurality of locations being operably connected to one or more base stations, generate a power scaling vector based on the channel coefficient matrices, select one or more pre-coding matrices based at least in part on the power scaling vector, and transmit the selected pre-coding matrices and the power scaling vector to the one or more base stations, causing the one or more base stations to transmit further data based on the selected pre-coding matrices and the power scaling vector.

Embodiments of the present invention will now be described, by way of examples only, with reference to the accompanying drawings, in which:

FIGURE 1 illustrates an example network environment of a mobile device;

FIGURE 2 illustrates an example multi-point to single-point radio connection between a mobile device and a cellular network;

FIGURE 3 illustrates an example method of joint power setting and pre-coding; and

FIGURE 4 illustrates an example computer system.

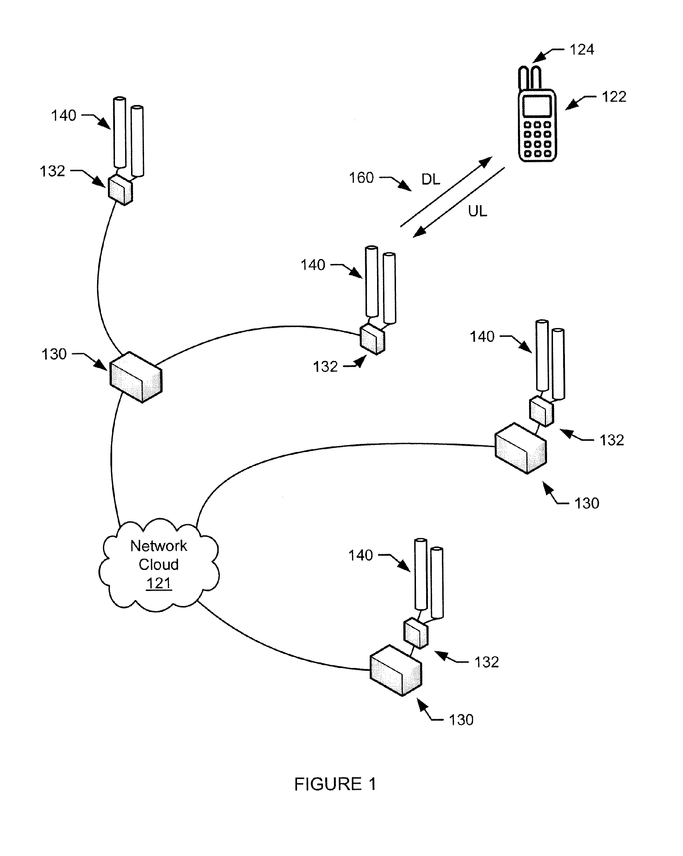

FIGURE 1 illustrates an example network environment of a mobile device. Network cloud 121 generally represents a network or collection of networks (such as the Internet, a corporate intranet, a virtual private network, a local area network, a wireless local area network, a cellular network, a wide area network, a metropolitan area network, or a combination of two or more such networks) over which mobile device 122 may communicate with other devices connected to network could 121.

Mobile device 122 is generally a portable computer or computing device including functionality for communicating (e.g., remotely) over a network. For example, mobile device 122 can be a mobile phone, a tablet computer, a laptop computer, a handheld game console, an electronic book reader, or any other suitable portable devices. Mobile device 122 may execute one or more client applications, such as a web browser (e.g., Microsoft Windows Internet Explorer, Mozilla Firefox, Apple Safari, Google Chrome, and Opera, etc.) or special-purpose client application (e.g., Microsoft Outlook, Facebook for iPhone, etc.), to access and view content and messages transmitted from other devices connected to network cloud 121.

Mobile device 122 may connect to network cloud 121 via one or more base stations 130 of a cellular network (such as a Global System for Mobile Communications or GSM network, a Code Division Multiple Access or CDMA network, an LTE network, or a combination of two or more such networks). Base station 130 can be referred as Node B for 3rd generation (3G) cellular network (e.g., a Universal Mobile Telecommunications System or UMTS network), or evolved NB or eNB for an LTE network. Mobile device 122 can be referred as a user equipment (UE) in a cellular network. A base station may connect to one or more remote radio heads or RRH's (132), while each RRH may comprise one or more antennas 140. For example, a RRH connected to a base station can be remote to the base station to extend radio coverage of the base station. For example, a RRH can be connected to a base station via one or more optical fiber cables. A base station may communicate with another base station based on X2 interface, which can be implemented with a high-throughput and low-latency connection (e.g., a Gigabit Ethernet local area network). Mobile device 122 may communicate wirelessly with a base station via radio transmission between one or more antennas 124 of mobile device 122 and one or more antennas 140 of one or more RRH's connected to the base station. Hereafter, let's denote DL (downlink) as a direction of radio transmission of data from base station 130 (or RRH 132) to mobile device 122. Hereafter, let's denote UL (uplink) as a direction of radio transmission of data from mobile device 122 to base station 130 (or RRH 132).

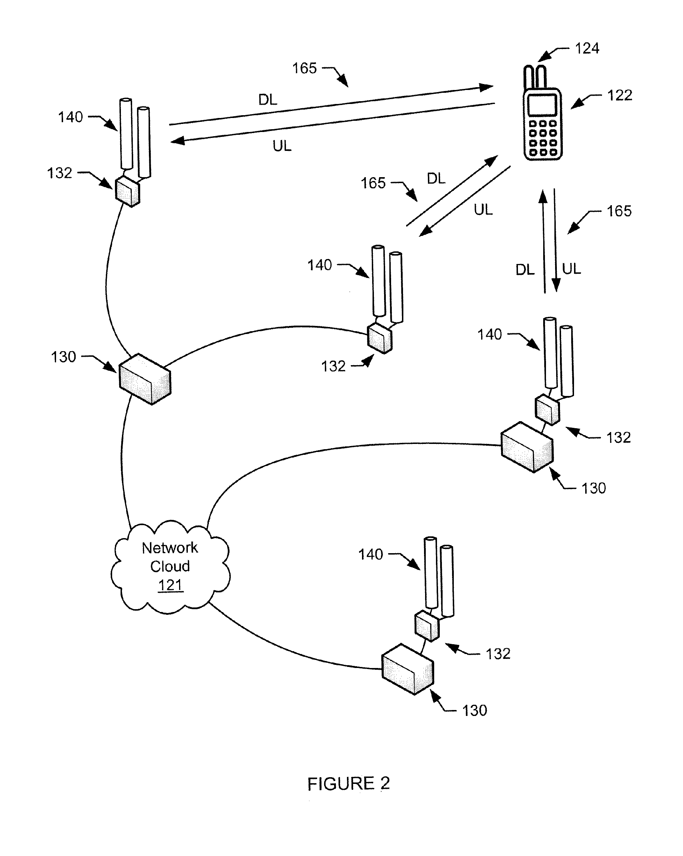

Radio connection between mobile device 122 and a cellular network can be single-point to single-point. That is, UL and DL transmissions (as illustrated by the arrows 160 in FIGURE 1) are between one or more antennas 124 of mobile device 122, and one or more antennas 140 at a same location (e.g., a location of an RRH as illustrated in FIGURE 1). Alternatively, radio connection between mobile device 122 and a cellular network can be multi-point to single-point, based on the use of coordinated multi-point processing (CoMP). CoMP is one type of MIMO radio transmission wherein multiple transmitting antennas are located at multiple geographically separated locations. FIGURE 2 illustrates an example multi-point to single-point radio connection between the mobile device and cellular network as illustrated in FIGURE 1. In the example of FIGURE 2, UL and DL transmissions (as illustrated by arrows 165) are between antennas 140 at a plurality of locations, and one or more antennas 124 of mobile device 122. Here, DL transmissions from the plurality of locations to mobile device 122 can be coordinated among the base stations and RRH's involved via the X2 interface and fiber optical cables described earlier. Similarly, UL transmissions from mobile device 122 to antennas at the plurality of locations can be coordinated among the base stations and RRH's involved via the X2 interface and fiber optical cables described earlier.

With DL CoMP, data for an UE are available at multiple geographically separated points. The data can be transmitted to the UE at a same time with coordination among the multiple transmitting points. Coordination among the multiple transmitting points can enable beam-forming (e.g., directing a signal in a particular direction) by using pre-coding techniques, as described herein. In particular embodiments, a mobile device (e.g., a mobile phone) may be connected to a cellular network (e.g., an LTE network) via one or more base stations. Particular embodiments contemplate any suitable cellular networks. In particular embodiments, DL radio transmissions from the one or more base stations to the mobile device may be between TX (transmitting) antennas at a plurality of locations and one or more RX (receiving) antennas of the mobile device. In particular embodiments, one or more TX antennas at each of the plurality of locations may be operably connected to one of the one or more base stations. For example, DL radio transmission may be between respective TX antennas of each of a plurality of geographically separated RRH's and RX antennas of the mobile device.

The strength (e.g., amplitude) of a received radio signal at the one or more RX antennas may depend on a communication channel (or medium for the DL radio transmission) between the TX antennas and the RX antennas. More particularly, a received radio signal at the one or more RX antennas may be represented by a first transmission model between $ML$ TX antennas at $L$ locations (i.e., $M$ TX antennas at each location) and $N$ RX antennas, as follows:

$$R_N = H_{N \times ML} \ F_{ML \times T} \ S_T + V_N$$

For example, in FIGURE 2, there are 2 TX antennas at each of the 3 TX locations (3 geographically separated RRH's), and 2 RX antenna (at mobile device 122). In the first transmission model above, $R_N$ is an amplitude of a received radio signal at the one or more RX antennas. $V_N$ is a noise vector at the one or more RX antennas. $S_T$ is a reference symbol or data (transmitted from the TX antennas to the one or more RX antennas) of length $T$. $H_{N \times ML}$ is a concatenated channel coefficient matrix of a size of $N \times ML$. $F_{ML \times T}$ is a pre-coding matrix. The pre-coding matrix can be used to modify data (e.g., reference symbol $S_T$) before transmitting for the purpose of beam-forming. More particularly,

$$H_{N \times ML} = \left[ H^0, H^1, ..., H^{L-1} \right]$$

$$H^i = H^i_{N \times M} = \begin{bmatrix} h_{0,iM} & \cdots & h_{0,iM+M-1} \\ & \cdots & \\ h_{N-1,iM} & \cdots & h_{N-1,iM+M-1} \end{bmatrix}$$

$$F_{ML \times T} = \begin{bmatrix} F^0 \\ \cdots \\ F^{L-1} \end{bmatrix}$$

$$F^i = F^i_{M \times T} = \begin{bmatrix} f_{iM,0} & \cdots & f_{iM,T-1} \\ & \cdots & \\ f_{iM+M-1,0} & \cdots & f_{iM+M-1,T-1} \end{bmatrix}$$

and,

$$R_N = H_{N \times ML} F_{ML \times T} S_T + V_N = \sum_{i=0}^{L-1} H^i F^i S_T + V_N$$

In the first transmission model above, $H^i$ or $H^i_{N \times M}$ is a channel coefficient matrix for a DL path from the $i$-th location to the UE (between the $i$-th RRH's $M$ TX antennas and UE's $N$ RX antennas). Each channel coefficient $h_{kj}$ representing a communication medium between an $j$-th TX antenna and an $k$-th RX antenna. The channel coefficient matrix represents channel state information of a communication channel. Particular embodiments contemplate any suitable representations of channel state information of a communication channel. $H_{N \times ML}$ is a concatenation of all DL path channel coefficient matrices. $F^i$ is a pre-coding matrix for the TX antennas at the $i$-th location.

Ordinarily for simplicity, a communication channel is modeled based on one type of statistical model for the propagation environment for radio signals transmitting between the TX antennas and the RX antennas. For example, a channel can be modeled based on Rayleigh fading model that can closely model a densely-built metropolitan area (e.g., Manhattan, New York).

Furthermore, the channel large scale fading (including path-loss and shadowing) between any TX antenna at an RRH and any RX antenna at a UE can be assumed to be the same. That is, channel coefficients between different pairs of TX and RX antennas can have the same path-loss and shadow fading effects. The operator of the cellular network can select a set of pre-determined pre-coding matrices, also called a cookbook, based the simplified channel model described above, and store the cookbook in one or more storage devices of each of the one or more base stations, and in one or more local storage devices of UE's of the cellular network. In particular embodiments, the one or more base stations may cause the TX antennas at the plurality of locations to transmit a reference signal (e.g., $S_T$), as modified by $F_{WL \times T}$,

to the mobile device, causing the mobile device to determine an amplitude of a received signal $R_N$ (i.e., received reference signal). In particular embodiments, the mobile device may determine a noise level (e.g., $V_N$) at the one or more RX antenna. In particular embodiments, the mobile device may determine a concatenated channel coefficient matrix $H_{N \times ML}$ based the received signal $R_N$ and the noise level $V_N$. In particular embodiments, the mobile device may, based on the first transmission model, select a particular pre-coding matrix from the cookbook to optimize spatial channel capacity between the TX antennas and the one or more RX antennas.

In particular embodiments, the mobile device may transmit the selection (e.g., an index to the selected pre-coding matrix or PMI) to the one or more base stations. For example, the mobile device may transmit the selection to at least one of the one or more base stations, causing the at least one base station to transmit the selection to rest of the one or more base stations. By transmitting an index to the selected pre-coding matrix (instead of the selected pre-coding matrix itself), the mobile device may reduce data load in UL transmission. For example, if there are 16 pre-determined pre-coding matrices in the cookbook, the mobile device can transmit only a 4-bit datum to the one or more base stations, instead of the selected pre-coding matrix itself that may require many bytes of data. In particular embosiments, the one or more base stations may transmit further data to the mobile device based on the selected pre-coding matrix (e.g., to modify the further data with the selected pre-coding matrix before transmission).

However, the simplified channel model described above (based on Rayleigh models) can have difficulties in optimizing spatial channel capacity for a propagation environment different than the assumed. The simplified channel model described above can also have difficulties in optimizing spatial channel capacity if different DL transmission paths (e.g., as illustrated in FIGURE 2) have different path-loss and shadow fading effects, which is possible with the TX antennas are at different locations. Meanwhile, it is desirable to have one cookbook for all UE's of the cellular network (e.g., in order to reduce complexity of the UE's). Particular embodiments herein describe methods of optimizing spatial channel capacity by compensating disparate path-loss and shadow fading effects between different DL transmission paths (i.e., between different pairs of TX and RX antennas). Particular embodiments can optimize spatial channel capacity by adjusting DL transmission power for TX antennas at different locations.

Particular embodiments can be based on a second transmission model between *ML* TX antennas at *L* locations (i.e., *M* TX antennas at each location) and *N* RX antennas, as follows:

$$R_N = H'_{N \times ML} \, F_{ML \times T} \, S_T \;+\; V_N$$

In the second transmission model above, $R_N$ is a received radio signal at the one or more RX antennas. $V_N$ is a noise vector at the one or more RX antennas. $S_T$ is a reference symbol or data (transmitted from the TX antennas to the RX antennas) of length $T$. $F_{ML \times T}$ is a pre-coding matrix based on the cookbook of the first transmission model. That is, the second transmission model can re-use the cookbook of the first transmission model. The second transmission model further defines a power scaling vector $A$:

$$A = \left[ a_0, a_1, ..., a_{L-1} \right]$$

$$a_0 = 1$$

$$a_i \;=\; \dfrac{E\!\left(\left\|H^0\right\|_F\right)}{E\!\left(\left\|H^i\right\|_F\right)}, \;\text{for } 0 < i < L, \text{ wherein}$$

$E(\ )$ is expectation value, and $\|\ \|_F$ is Frobenius norm of matrix.

Assuming the 0-th location has the strongest corresponding received signal among the $L$ locations of the TX antennas, for each $i$-th location of the $L$ locations, $a_i$ can be a ratio in signal strength between the $i$-th location and the 0-th location (the location having the strongest corresponding received signal). For example, $H^i$ can be determined by the first transmission model, of a DL path from the $i$-th location to the mobile device. For example, $a_i$ can be a ratio of signal strength in amplitude as calculated by expectation value of Frobenius norm of the channel coefficient matrix $H^i$. Particular embodiments contemplate any suitable measurements of received signal strength.

The second transmission model can adjust the concatenated channel coefficient matrix $H_{N \times ML}$ (as determined by the first transmission model) by the power scaling vector $A$ :

$$H'_{N \times ML} \;=\; \left[a_0 H^0, a_1 H^1, \ldots, a_{L-1} H^{L-1}\right]$$

$$R_N \;=\; H'_{N \times ML}\, F_{ML \times T}\, S_T \;+\; V_N \;=\; \sum_{i=0}^{L-1} a_i H^i F^i S_T \;+\; V_N$$

That is, the second transmission model can use a power scaling value $a_i$ to compensate discrepancy in path-loss and shadow fading effects between the DL paths. The path-loss and shadow fading effects among all $L$ DL paths can be made equal with the power scaling vector $A$.

Based on the first and second transmission model described above, in particular embodiments, the one or more base stations may cause the TX antennas to transmit a reference signal (e.g., $S_T$), as modified by pre-coding matrix $F_{ML \times T}$, to the mobile device, causing the mobile device to determine an amplitude of a received signal $R_N$ (i.e., received reference signal). In particular embodiments, the mobile device may determine a noise level $V_N$ at the one or more RX antenna. In particular embodiments, the mobile device may determine a first concatenated channel coefficient matrix $H_{N \times ML}$ based the received signal $R_N$, and the pre-coding matrix $F_{ML \times T}$ (by using the first transmission model). In particular embodiments, the mobile device may calculating a power scaling vector $A$ based on the first channel coefficient matrix of the DL paths from the plurality of locations to the mobile device. In particular embodiments, the mobile device may calculating a second concatenated channel coefficient matrix $H'_{N \times ML}$ by modifying the first concatenated channel coefficient matrix $H_{N \times ML}$ with the power scaling vector $A$. That is, the second concatenated channel coefficient matrix represents the $L$ DL paths with equal path-loss and shadow fading effects, as adjusted by the power scaling vector $A$.

In particular embodiments, the mobile device may determine a selection (or PMI index $k$ ) of a pre-coding matrix for the $j$-th location based on:

$$k \quad = \quad \arg\left( \max_{j, Fj \in \hat{F}} \left( \sigma_{\min}\left( H'F_j \right) \right) \right),$$

wherein $\sigma_{\min}(Y)$ is singular value of matrix $Y$ with the minimum modules (absolute values); $F$ is the cookbook; $F_j$ is the pre-coding matrix previously used at the $j$-th location.)

If TX transmission power of the antennas at each location of the plurality of locations is adjusted in pre-determined steps (e.g., in steps of 1dB), the mobile device may determine PMI index $k$ based on a quantized version of $A$, $Q(A)$, while the quantization $Q(.)$ can be done with respect to the TX power adjustment step. For example, the mobile device may determine a quantized version $Q(A)$ in a number of adjustment steps (from a nominal value). For example, a quantized version $Q(A)$ can be represented with a 1-byte datum for each location, while a real value of power scaling vector $A$ may require many bytes of data for each location. In particular embodiments, the quantized power scaling vector $A = Q(A)$ can be used to adjust the concatenated channel coefficient matrix:

$$H''_{N \times ML} \quad = \quad \left[ Q(a_0)H^0, Q(a_1)H^1, ..., Q(a_{L-1})H^{L-1} \right],$$

while PMI index $k$ can be determined based on the quantized version of the adjusted concatenated channel coefficient matrix:

$$k \quad = \quad \arg\left( \max_{j, Fj \in \hat{F}} \left( \sigma_{\min}\left( H''F_j \right) \right) \right)$$

In particular embodiments, the mobile device may transmit the selection (e.g., PMI index) and the power scaling vector to the one or more base stations. For example, the mobile device may transmit the selection and the power scaling vector to at least one of the one or more base stations, causing the at least one base station to transmit the selection and the power scaling to the rest of the one or more base stations. For example, the at least one base station can be a base station with the strongest connection with the mobile device, such as the base station connected to the 0-th location described above. In particular embodiments, the mobile device may transmit a quantized version of power scaling vector to the one or more base stations, while the quantized version of power scaling vector may require less data load as described earlier. In particular embodiments, the one or more base stations may transmit further data to the mobile device based on the selected pre-coding matrix and the power scaling vector. For example, the one or more base stations may modify data with the selected pre-coding matrix before transmitting, and cause the one or more antennas at each of the plurality of locations to adjust transmission power based on respective power scaling vector.

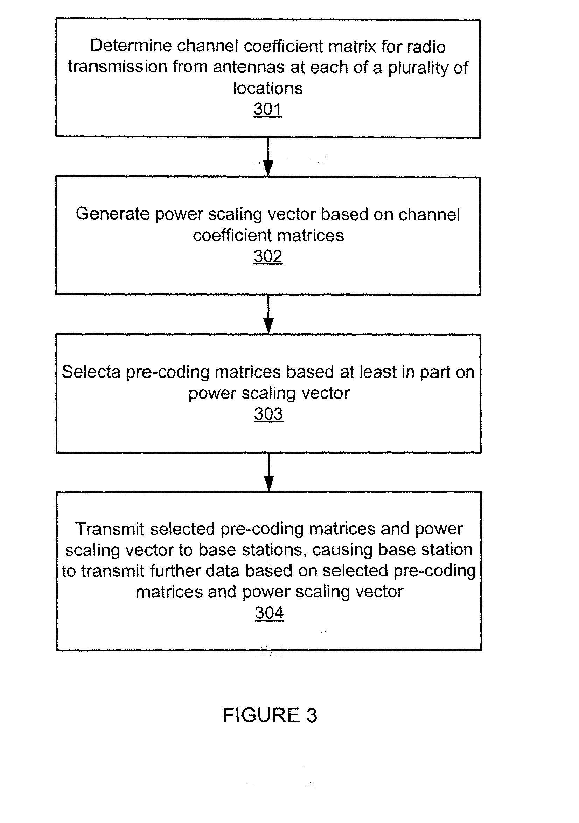

FIGURE 3 illustrates an example method of joint power setting and pre-coding. In particular embodiments, a mobile device may receive radio transmission from one or more antennas at each of a plurality of locations, the antennas being operably connected to one or more base stations. In particular embodiments, the mobile device may determine a respective channel coefficient matrix for radio transmission from the antennas at each of the plurality of locations (301). That is, each channel coefficient matrix corresponds to a DL path from antennas at one of the plurality of locations to the mobile device. In particular embodiments, the mobile device may generate a power scaling vector based on the channel coefficient matrices (302).

For example, the mobile device may generate a power scaling vector based on a relative ratio in received signal strength between the DL paths from the plurality of locations. In particular embodiments, the mobile device may select one or more pre-coding matrices based at least in part on the power scaling vector (303). In particular embodiments, the mobile device may transmit the selected pre-coding matrices and the power scaling vector to the one or more base stations, causing the one or more base stations to transmit further data based on the selected pre-coding matrices and the power scaling vector (304). Particular embodiments may repeat the steps of the method of FIGURE 3, where appropriate. Moreover, although this disclosure describes and illustrates particular steps of the method of FIGURE 3 as occurring in a particular order, this disclosure contemplates any suitable steps of the method of FIGURE 3 occurring in any suitable order. Furthermore, although this disclosure describes and illustrates particular components, devices, or systems carrying out particular steps of the method of FIGURE 3, this disclosure contemplates any suitable combination of any suitable components, devices, or systems carrying out any suitable steps of the method of FIGURE 3.

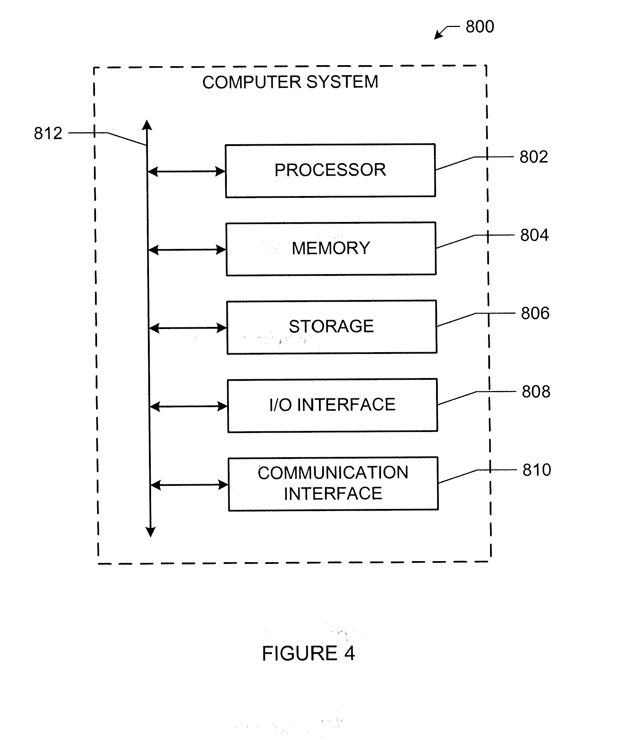

FIGURE 4 illustrates an example computer system 800, which may be used with some embodiments of the present invention. This disclosure contemplates any suitable number of computer systems 800. This disclosure contemplates computer system 800 taking any suitable physical form. As example and not by way of limitation, computer system 800 may be an embedded computer system, a system-on-chip (SOC), a desktop computer system, a mobile computer system, a game console, a mainframe, a mesh of computer systems, a server, or a combination of two or more of these. Where appropriate, computer system 800 may include one or more computer systems 800; be unitary or distributed; span multiple locations; span multiple machines; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular embodiments, computer system 800 includes a processor 802, memory 804, storage 806, an input/output (I/O) interface 808, a communication interface 810, and a bus 812. In particular embodiments, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular embodiments, processor 802 may include one or more internal caches for data, instructions, or addresses. In particular embodiments, memory 804 includes main memory for storing instructions for processor 802 to execute or data for processor 802 to operate on. As an example and not by way of limitation, computer system 800 may load instructions from storage 806 to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. One or more memory buses (which may each include an address bus and a data bus) may couple processor 802 to memory 804. Bus 812 may include one or more memory buses, as described below. In particular embodiments, one or more memory management units (MMUs) reside between processor 802 and memory 804 and facilitate accesses to memory 804 requested by processor 802. In particular embodiments, memory 804 includes random access memory (RAM). This RAM may be volatile memory, where appropriate Where appropriate, this RAM may be dynamic RAM (DRAM) or static RAM (SRAM).

In particular embodiments, storage 806 includes mass storage for data or instructions. As an example and not by way of limitation, storage 806 may include an HDD, a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular embodiments, storage 806 is non-volatile, solid-state memory. In particular embodiments, storage 806 includes read-only memory (ROM). Where appropriate, this ROM may be mask-programmed ROM, programmable ROM (PROM), erasable PROM (EPROM), or flash memory or a combination of two or more of these.

In particular embodiments, I/O interface 808 includes hardware, software, or both providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, microphone, display, touch screen, mouse, speaker, camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular embodiments, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) for communicating with an Ethernet or other wire-based network or a wireless NIC (WNIC) for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (e.g., a BLUETOOTH WPAN), a WI-FI network (e.g., a 802.11a/b/g/n WI-FI network,), a WI-MAX network, a cellular network (e.g., a Global System for Mobile Communications (GSM) network, a Long Term Evolution (LTE) network), or other suitable wireless network or a combination of two or more of these.

In particular embodiments, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an INFINIBAND interconnect, a low-pin-count (LPC) bus, a memory bus, a Peripheral Component Interconnect Express or PCI-Express bus, a serial advanced technology attachment (SATA) bus, a Inter-Integrated Circuit (I2C) bus, a Secure Digital (SD) memory interface, a Secure Digital Input Output (SDIO) interface, a Universal Serial Bus (USB) bus, a General Purpose Input/Output (GPIO) bus, or another suitable bus or a combination of two or more of these. Bus 812 may include one or more buses 812, where appropriate.

Herein, reference to a computer-readable non-transitory storage medium may include a semiconductor-based or other integrated circuit (IC) (such as, for example, a field-programmable gate array (FPGA) or an application-specific IC (ASIC)), a hard disk drive (HDD), a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, another suitable computer-readable non-transitory storage medium, or a suitable combination of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

This disclosure encompasses all changes, substitutions, variations, alterations, and modifications to the example embodiments herein that a person having ordinary skill in the art would comprehend. Moreover, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

**Claims**

1.    A method comprising:

determining a respective channel coefficient matrix for radio transmission received from one or more antennas at each of a plurality of locations, the antennas at the plurality of locations being operably connected to one or more base stations;
generating a power scaling vector based on the channel coefficient matrices;
selecting one or more pre-coding matrices based at least in part on the power scaling vector; and
transmitting the selected pre-coding matrices and the power scaling vector to the one or more base stations, causing the one or more base stations to transmit further data based on the selected pre-coding matrices and the power scaling vector.

2.    The method of Claim 1, wherein the generating a power scaling vector based on the channel coefficient matrices further comprises:

quantizing the power scaling vector.

3. The method of Claim 1 or 2, wherein the generating a power scaling vector is further based on a determination of Frobenius norm of each of the channel coefficient matrices.

4. The method of any one of Claims 1 to 3, wherein the transmitting the selected pre-coding matrices and the power scaling vector to the one or more base stations comprises:

transmitting the selected pre-coding matrices and the power scaling vector to at least one of the one or more base station, causing the at least one base station to transmit the selected pre-coding matrices and the power scaling vector to rest of the one or more base stations.

5. The method of any one of Claims 1 to 4, wherein the causing the one or more base stations to transmit further data based on the selected pre-coding matrices and the power scaling vector comprises:

causing the one or more base stations to modify the further data with the respective selected pre-coding matrices before transmission; and
causing the antennas at the plurality of locations to adjust transmission power based on respective values of the power scaling vector.

6. A computer software, when run on a computer, causes the computer to execute a method according to any one of claims 1 to 5.

7. One or more computer-readable non-transitory storage media embodying a computer software according to claim 6.

8. An apparatus comprising:

one or more main processors;
one or more communication interfaces;
one or more computer-readable non-transitory storage media embodying instructions operable, when executed, cause one or more of the processors to:

determine a respective channel coefficient matrix for radio transmission received from one or more antennas at each of a plurality of locations, the antennas at the plurality of locations being operably connected to one or more base stations;
generate a power scaling vector based on the channel coefficient matrices;
select one or more pre-coding matrices based at least in part on the power scaling vector; and
transmit the selected pre-coding matrices and the power scaling vector to the one or more base stations, causing the one or more base stations to transmit further data based on the selected pre-coding matrices and the power scaling vector.

9. The apparatus of Claim , wherein to generate a power scaling vector based on the channel coefficient matrices, the instructions are further operable, when executed, cause one or more of the processors to:

quantize the power scaling vector.

10. The apparatus of Claim , wherein to generate a power scaling vector is further based on a determination of Frobenius norm of each of the channel coefficient matrices.

11. The apparatus of Claim , wherein to transmit the selected pre-coding matrices and the power scaling vector to the one or more base stations, the instructions are operable, when executed, cause one or more of the processors to:

transmit the selected pre-coding matrices and the power scaling vector to at least one of the one or more base station, causing the at least one base station to transmit the selected pre-coding matrices and the power scaling vector to rest of the one or more base stations.

12. The apparatus of Claim , wherein to cause the one or more base stations to transmit further data based on the selected pre-coding matrices and the power scaling vector, the instructions are operable, when executed, cause one or more of the processors to:

cause the one or more base stations to modify the further data with the respective selected pre-coding matrices before transmission; and
cause the antennas at the plurality of locations to adjust transmission power based on respective values of the power scaling vector

13. The apparatus of Claim , wherein one or more of the communication interfaces are operable to connect to an LTE network.

FIGURE 1

FIGURE 2

Determine channel coefficient matrix for radio
transmission from antennas at each of a plurality of
locations
301

Generate power scaling vector based on channel
coefficient matrices
302

Selecta pre-coding matrices based at least in part on
power scaling vector
303

Transmit selected pre-coding matrices and power
scaling vector to base stations, causing base station
to transmit further data based on selected pre-coding
matrices and power scaling vector
304

FIGURE 3

800

COMPUTER SYSTEM

812

PROCESSOR — 802

MEMORY — 804

STORAGE — 806

I/O INTERFACE — 808

COMMUNICATION INTERFACE — 810

FIGURE 4

Europäisches
Patentamt
European
Patent Office
Office européen
des brevets

## EUROPEAN SEARCH REPORT

Application Number

EP 12 15 1037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | INTERDIGITAL: "Analysis of Feedback Mechanisms for CoMP", 3GPP DRAFT; R1-092585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050351081, [retrieved on 2009-06-24] * pages 3-6, paragraph 4-5 * * Appendix A; pages 8-10 * | 1-13 | INV. H04B7/02 H04B7/06 H04W52/24 |
| A | TEXAS INSTRUMENTS: "Aspects of Coordinated Multi-point Transmission for Advanced E-UTRA", 3GPP DRAFT; R1-083530 TI COOPERATIVE MP V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050316894, [retrieved on 2008-09-24] * pages 1-3, paragraph 1-3 * * figure 1 * | 1-13 | |
| A | US 2010/273495 A1 (ONGGOSANUSI EKO N [US] ET AL) 28 October 2010 (2010-10-28) * abstract * * paragraphs [0012] - [0026] * | 1-13 | TECHNICAL FIELDS SEARCHED (IPC) H04B H04W |
| A | US 2010/290382 A1 (HUI DENNIS [US] ET AL) 18 November 2010 (2010-11-18) * abstract * * paragraphs [0024] - [0032] * | 1-13 | |

The present search report has been drawn up for all claims

| Place of search | Date of completion of the search | Examiner |
|---|---|---|
| Munich | 20 April 2012 | Helms, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 15 1037

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2012

| Patent document cited in search report | Publication date | Patent family member(s) | Publication date |
|---|---|---|---|
| US 2010273495 A1 | 28-10-2010 | NONE | |
| US 2010290382 A1 | 18-11-2010 | EP 2430772 A1<br>US 2010290382 A1<br>WO 2010131228 A1 | 21-03-2012<br>18-11-2010<br>18-11-2010 |

For more details about this annex : see Official Journal of the European Patent Office, No. 12/82